# EUROPEAN PATENT APPLICATION

(11) **EP 3 668 031 A1**
(43) Date of publication of application: **17.06.2020**
(21) Application number: 17921173.5
(22) Date of filing: 10.08.2017
(51) Int. Cl.: H04L 27/26, H04B 7/0413

(54) **USER EQUIPMENT AND RADIO COMMUNICATION METHOD**

(71) Applicant: NTT DOCOMO, INC., Chiyoda-ku Tokyo 100-6150 (JP)
(72) Inventor: SAITO, Keisuke, Tokyo 100-6150 (JP); TAKEDA, Kazuaki, Tokyo 100-6150 (JP); NAGATA, Satoshi, Tokyo 100-6150 (JP); KAKISHIMA, Yuichi, Palo Alto, California 94304 (US)
(74) Representative: Hoffmann Eitle
(86) International application number: PCT/JP2017/029184
(87) International publication number: WO 2019/030913

(57) **Abstract**

User terminal (20) receives a downlink resource including a data signal, a demodulation RS, and a correction RS via receiver (202), performs channel estimation using the demodulation RS via channel estimator (206) and channel corrector (207), and demodulates the data signal using a result of the channel estimation via demodulator and decoder (208). An MCS (CQI) index value and demodulation RS ports are associated with each CW of the data signal, and the correction RS is associated with any of demodulation RS ports associated with a high-quality CW corresponding to a highest MCS (CQI) index value. Channel estimator (206) and channel corrector (207) calculate a phase fluctuation amount using the correction RS associated with the demodulation RS port for the high-quality CW.

## Description

### Technical Field

The present invention relates to a user terminal and a radio communication method in a next generation mobile communication system.

### Background Art

Long Term Evolution (LTE) has been specified for achieving a higher data rate, lower latency, and/or the like in a Universal Mobile Telecommunications System (UMTS) network (NPL 1). Successor systems of LTE (for example, the systems called LTE-A (LTE-Advanced), FRA (Future Radio Access), 5G (5th generation mobile communication system), 5G+ (5G plus), and New-RAT (Radio Access Technology)) have been also studied for achieving a broader bandwidth and a higher speed based on LTE.

For a future radio communication system (for example, 5G), use of a wideband frequency spectrum has been studied to meet demands such as ultrahigh speed, large capacity, and ultralow latency. Therefore, for a future radio communication system, use of a higher frequency band (for example, a band of 30 to 70 GHz) in addition to a frequency band used in an existing LTE system and use of massive multiple input multiple output (MIMO) using multiple antenna elements have been studied.

Also, for a future radio communication system, mapping a demodulation reference signal (for example, a demodulation reference signal (DMRS); hereinafter, may be referred to as "demodulation RS") on a front side of a subframe to achieve reduction of processing time required for channel estimation and signal demodulation in a subframe has been studied (NPL 2).

Where a demodulation RS is mapped on the front side of a subframe, in a user terminal (UE: user equipment), if demodulation is performed simply using a channel estimation value based on the demodulation RS, the demodulation fails to follow temporal fluctuation of the channel and/or temporal fluctuation of phase noise, resulting in deterioration in channel estimation accuracy due to the effect of temporal fluctuation of the phase (phase fluctuation).

Therefore, mapping a correction reference signal for correcting phase fluctuation in a subframe (for example, a Phase Tracking Reference Signal (PTRS); hereinafter may be referred to as "correction RS") has been studied.

### Citation List

### Non-Patent Literature

NPL 1
   3GPP TS 36.300 v13.4.0, "Evolved Universal Terrestrial Radio Access (E-UTRA) and Evolved Universal Terrestrial Radio Access Network (E-UTRAN); Overall description; Stage 2 (Release 13)," June 2016
NPL 2
   R1-165575, Qualcomm, Ericsson, Panasonic, NTT Docomo, ZTE, Convida, Nokia, ASB, Sony, Intel, "Way Forward On Frame Structure," May 2016

### Summary of Invention

### Technical Problem

Associating a correction RS with either an assigned DMRS port or a DMRS port in an assigned DMRS port group has been studied. However, a method of association of a correction RS with a DMRS port where transmission of a plurality of codewords (CWs) is employed has not sufficiently been studied.

An aspect of the present invention provides a user terminal and a radio communication method that enable properly mapping a correction RS where transmission of a plurality of CWs is employed.

### Solution to Problem

A user terminal according to an aspect of the present invention includes: a receiver that receives a downlink resource including a data signal, a demodulation reference signal, and a correction reference signal; a channel estimator that performs channel estimation, using the demodulation reference signal; and a demodulator that demodulates the data signal, using a result of the channel estimation, in which a value indicating communication quality and a plurality of demodulation reference signals are associated with each codeword of the data signal, the correction reference signal is associated with any of demodulation reference signal ports associated with a high-quality codeword corresponding to a value indicating highest communication quality, and the channel estimator calculates a phase fluctuation amount, using the correction reference signal associated with the demodulation reference signal ports for the high-quality codeword.

### Advantageous Effects of Invention

An aspect of the present invention enables properly associating a correction RS with a DMRS port where transmission of a plurality of CWs is employed.

### Brief Description of Drawings

FIG. 1 is a block diagram illustrating an example configuration of a radio base station according to Embodiment 1;
FIG. 2 is a block diagram illustrating an example configuration of a user terminal according to Embodiment 1;
FIG. 3 is a diagram illustrating example mapping where a correction RS is transmitted according to Embodiment 1;
FIG. 4 is a diagram illustrating example operation of downlink communication according to Embodiment 1;
FIG. 5 is a diagram illustrating an example of a CQI-MCS conversion table according to Embodiment 1;
FIG. 6 is a diagram illustrating example operation of uplink communication according to Embodiment 1;
FIG. 7A is a diagram for describing a first example of a method of association of PTRS ports with DMRS ports based on MCS index values according to Embodiment 1;
FIG. 7B is a diagram for describing a second example of a method of association of PTRS ports with DMRS ports based on MCS index values according to Embodiment 1;
FIG. 7C is a diagram for describing a third example of a method of association of PTRS ports with DMRS ports based on MCS index values according to Embodiment 1;
FIG. 8A is a diagram for describing a first example of a method of association of PTRS ports with DMRS ports based on CQI index values according to Embodiment 2;
FIG. 8B is a diagram for describing a second example of a method of association of PTRS ports with DMRS ports based on CQI index values according to Embodiment 2;
FIG. 8C is a diagram for describing a third example of a method of association of PTRS ports with DMRS ports based on CQI index values according to Embodiment 2;
FIG. 9 is a diagram illustrating other example mapping where a correction RS is transmitted; and
FIG. 10 is a diagram illustrating an example of hardware configurations of a radio base station and a user terminal according to the present invention.

### Description of Embodiments

Embodiments of the present invention will be described in detail below with reference to the accompanying drawings.

### (Embodiment 1)

As stated above, associating a PTRS for correcting phase fluctuation with DMRS ports where a DMRS is mapped on a front side of a subframe has been studied. A user terminal performs channel estimation while correcting phase fluctuation using the PTRS, enabling suppression of deterioration in channel estimation accuracy.

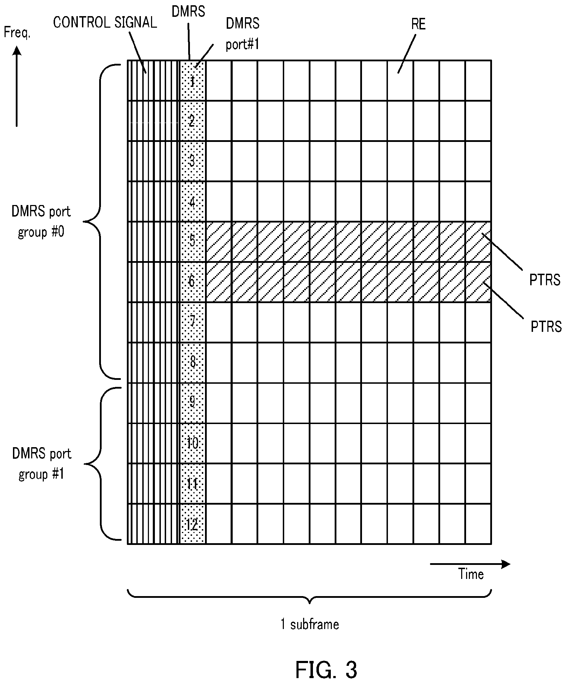

There are the following methods of association of a PTRS port with at least one of a plurality of DMRS ports belonging to a DMRS port group (see FIG. 3).
(Method A1) Associating PTRS ports with DMRS ports in order from a DMRS port of a smallest number from among DMRS ports belonging to a DMRS port group.
(Method A2) Associating PTRS ports with DMRS ports of numbers that are different in each resource block from among DMRS ports belonging to a DMRS port group.

However, with method A1, where transmission of a plurality of CWs is employed, communication quality of a CW assigned to a DMRS port of the smallest number is not necessarily high. Therefore, even if a PTRS is associated with the DMRS port of the smallest number, it is likely that a high phase fluctuation estimation accuracy cannot be obtained.

Also, with method A2, where transmission of a plurality of CWs is employed and there is a large difference in communication quality between the CWs, a PTRS is likely to be associated with a DMRS port to which a CW of low communication quality is assigned. In this case, it is likely that a phase fluctuation estimation accuracy deteriorates instead, resulting in deterioration in reception quality.

Therefore, in the present embodiment, where transmission of a plurality of CWs is employed, DMRS ports to be associated with PTRS ports are determined based on MCS index values, which are an example of values relating to communication quality of respective CWs.

Note that the determination may be made using a modulation scheme (modulation level), a coding rate and/or the number of transmission bits instead of MCS index values. Also, the modulation scheme (modulation level) may be expressed by the number of bits per symbol.

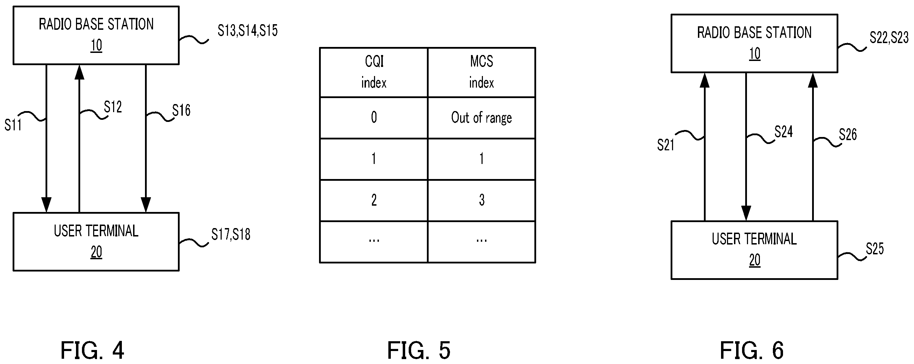

Also, a combination of a modulation scheme and a coding rate indicated by an MCS index value may be, for example, a combination that satisfies a condition in which a rate of errors relative to data is equal to or below a predetermined target error rate. Also, a combination of a modulation scheme and a coding rate indicated by an MCS index value may be identified, for example, from a CQI index value with reference to the later-described CQI-MCS conversion table illustrated in FIG. 5, a CQI-MCS conversion expression, and/or the like.

### <Radio Communication System>

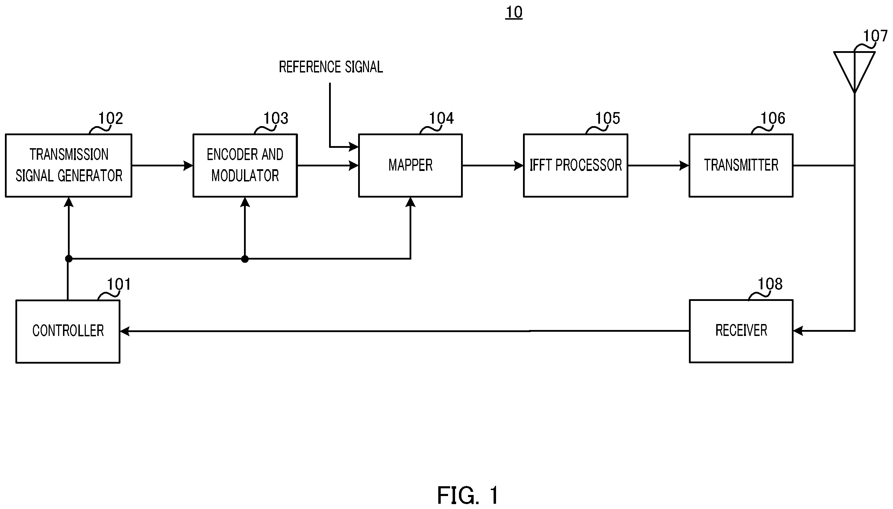

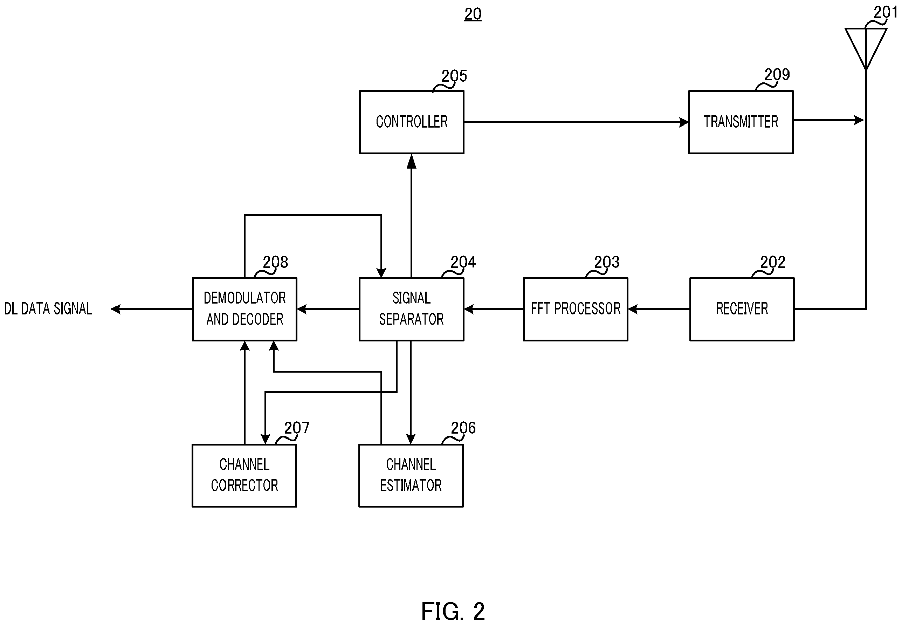

A radio communication system according to the present embodiment at least includes radio base station 10 illustrated in FIG. 1 and user terminal 20 illustrated in FIG. 2. User terminal 20 is connected to radio base station 10. Radio base station 10 transmits a DL control signal to user terminal 20 using a downlink control channel (for example, a physical downlink control channel (PDCCH) and transmits a DL data signal, a DMRS, and a PTRS using a downlink data channel (for example, a physical downlink shared channel (PDSCH)). Also, user terminal 20 transmits an UL data signal, a DMRS, and a PTRS to radio base station 10 using an uplink data channel (for example, a physical uplink shared channel (PUSCH)).

### <Radio Base Station>

FIG. 1 is a diagram illustrating an example of an overall configuration of a radio base station according to the present embodiment. Radio base station 10 illustrated in FIG. 1 has a configuration including controller 101, transmission signal generator 102, encoder and modulator 103, mapper 104, inverse fast Fourier transform (IFFT) processor 105, transmitter 106, antenna 107, and receiver 108.

Controller 101 (scheduler) performs scheduling (for example, resource assignment) for, for example, the DL data signal, the DL control signal, the DMRS, and the PTRS. Controller 101 performs scheduling so that the DMRS is mapped on a symbol on the front side of each subframe and the PTRS is mapped on a predetermined symbol other than a head symbol in a predetermined subcarrier of each subframe.

Also, controller 101 sets an MCS index value for each CW with reference to, for example, CQI index values transmitted from user terminal 20 and input from receiver 108. Controller 101 determines DMRS ports to be associated with PTRS ports based on the MCS index values of the respective CWs. "CW" is a unit of data block for providing an error correction code to a transmission signal (data stream). Note that details of a method of association of the PTRS ports with the DMRS ports will be described later.

Also, controller 101 outputs scheduling information indicating a result of the scheduling to transmission signal generator 102 and mapper 104.

Also, controller 101 outputs the above-set MCS index values of the respective CWs to transmission signal generator 102 and encoder and modulator 103. Note that the MCS index values of the CWs are not limited to the case where the MCS index values of the respective CWs are set by radio base station 10 and as described later, may be set by user terminal 20. Where user terminal 20 sets MCS index values for the respective CWs, radio base station 10 may receive the MCS index values of the respective CWs from user terminal 20.

Transmission signal generator 102 generates a transmission signal (including the DL data signal and the DL control signal). For example, the DL control signal includes downlink control information (DCI) including the scheduling information (for example, resource assignment information for the DL data signal) or the MCS index values output from controller 101. Transmission signal generator 102 outputs the generated transmission signal to encoder and modulator 103.

Encoder and modulator 103 performs, for example, coding processing (including error correction coding processing) and modulation processing of the transmission signal input from transmission signal generator 102 on a CW-by-CW basis based on the MCS index values of the respective CWs, the MCS index values being input from controller 101. Therefore, for example, where an MCS index value associated with a first CW and an MCS index value associated with a second CW are different from each other, different types of coding processing and modulation processing are performed for the first CW and the second CW. Also, encoder and modulator 103 outputs the transmission signal subjected to the modulation to mapper 104.

Mapper 104 maps the transmission signal input from encoder and modulator 103 on a predetermined radio resource (downlink resource) based on the scheduling information input from controller 101. Also, mapper 104 maps the reference signals (the DMRS and the PTRS) on the radio resource (downlink resource) based on the scheduling information. Note that the PTRS may be, for example, a reference signal that is different depending on user terminal 20 (UE specific RS) or may be a reference signal that is common to user terminals 20 (common RS). Mapper 104 outputs the resulting DL signal mapped on the radio resource to IFFT processor 105.

IFFT processor 105 performs IFFT processing on the DL signal, which is a frequency domain signal, input from mapper 104 and outputs the resulting DL signal, which is a time domain signal (that is, a signal including OFDM symbols) to transmitter 106. Note that a signal waveform of the DL signal is a signal waveform based on OFDM modulation. However, the signal waveform of the DL signal is not limited to this and may be a signal waveform based on another scheme (for example, single carrier-frequency division multiple access (SC-FDMA) or DFT-Spread-OFDM (DFT-S-OFDM).

Transmitter 106 performs transmission processing such as up-conversion and amplification on the baseband DL signal input from IFFT processor 105 and transmits the resulting radio-frequency signal (DL signal) from antenna 107.

Receiver 108 performs reception processing such as amplification and down-conversion on a radio-frequency signal (UL signal) transmitted from user terminal 20 and received via antenna 107 and outputs the baseband UL signal including a CQI index value to controller 101.

### <User terminal>

FIG. 2 is a diagram illustrating an example of an overall configuration of a user terminal according to the present embodiment. User terminal 20 illustrated in FIG. 2 has a configuration including antenna 201, receiver 202, fast Fourier transform (FFT) processor 203, signal separator 204, controller 205, channel estimator 206, channel corrector 207, demodulator and decoder 208, and transmitter 209.

Receiver 202 performs reception processing such as amplification and down-conversion on a radio-frequency signal (DL signal) received via antenna 201 and outputs the baseband DL signal to FFT processor 203.

FFT processor 203 performs FFT processing on the DL signal, which is a time domain signal, input from receiver 202 and outputs the resulting DL signal, which is a frequency domain signal, to signal separator 204.

Signal separator 204 demaps a DL control signal, a DMRS, and a PTRS from the DL signal input from FFT processor 203, outputs the DMRS to controller 205 and channel estimator 206, outputs the PTRS to channel corrector 207, and outputs the DL control signal to demodulator and decoder 208. Note that signal separator 204 determines DMRS ports associated with PTRS ports based on MCS index values. Details of a method of association of PTRS ports with DMRS ports will be described later. Also, the PTRS may be output to channel estimator 206 together with the DMRS. Also, signal separator 204 demaps a DL data signal from the DL signal based on scheduling information (for example, resource assignment information) input from demodulator and decoder 208 and outputs the DL data signal to demodulator and decoder 208.

Controller 205 measures a channel quality (for example, an SNIR, an SNR, or an SIR) between radio base station 10 and user terminal 20, using a channel quality measurement RS (CSI-RS) and/or the DMRS input from signal separator 204. Controller 205 outputs a CQI index value corresponding to a result of the measurement, to transmitter 209.

Channel estimator 206 performs channel estimation using the DMRS (and the PTRS) input from signal separator 204 and outputs a channel estimation value, which is a result of the estimation, to demodulator and decoder 208.

Channel corrector 207 performs channel estimation using the PTRS input from signal separator 204 and calculates differences between channel estimation values of the respective symbols to calculate a phase fluctuation amount (temporal fluctuation amount), and outputs the phase fluctuation amount (temporal fluctuation amount) to demodulator and decoder 208. Note that channel corrector 207 may be included in channel estimator 206.

Demodulator and decoder 208 demodulates the DL control signal input from signal separator 204. Note that in order to shorten delay time, demodulator and decoder 208 may perform the demodulation of the DL control signal using the channel estimation value alone without using the phase fluctuation amount. Also, demodulator and decoder 208 performs decoding processing (for example, blind detection processing) on the demodulated DL control signal. Demodulator and decoder 208 outputs control information, such as scheduling information, for the relevant user terminal, the control information being obtained by decoding the DL control signal, to signal separator 204.

Also, demodulator and decoder 208 demodulates the DL data signal input from signal separator 204 based on the channel estimation value input from channel estimator 206, the phase fluctuation amount input from channel corrector 207, and the MCS index values input from controller 205. More specifically, demodulator and decoder 208 corrects the channel estimation values of resources (for example, subcarriers) on which the DL data signal to be demodulated is mapped, according to the phase fluctuation amount, performs channel compensation (equalization processing) using the corrected channel estimation values of the signal to be demodulated, and demodulates the DL data signal subjected to the channel compensation. Also, demodulator and decoder 208 decodes the demodulated DL data signal, for example, based on the MCS index values input from controller 205 and transfers the obtained reception data to an application section (not illustrated). Note that the application section performs, for example, processing relating to a layer that is higher than a physical layer or a MAC layer.

Transmitter 209 performs transmission processing such as up-conversion and amplification on the baseband UL signal including the CQI index value and transmits the resulting radio-frequency signal (UL signal) toward radio base station 10 from antenna 201.

### <Mapping of DMRS and PTRS>

Next, example mapping of a DMRS and a PTRS according to the present embodiment will be described with reference to FIG. 3.

Each block illustrated in FIG. 3 represents one RE, which is a radio resource area defined by one symbol and one subcarrier. Also, in FIG. 3, one subframe is constituted by 14 symbols. In FIG. 3, a resource block (RB, also referred to as, for example, a resource unit or a resource block pair), which is a unit of resource assignment, is defined by 168 resource elements (REs) constituted by 14 symbols and 12 subcarriers. In FIG. 3, only a control signal, a DMRS, and a PTRS are illustrated and a DL data signal mapped in the subframe is omitted.

As illustrated in FIG. 3, the control signal is mapped on head and second symbols, and the DMRS is mapped in the frequency direction of a front-side symbol (third symbol in FIG. 3) of the subframe. Note that the DMRS may be mapped on a fourth symbol. Alternatively, if no control signal is mapped, the DMRS may be mapped on the first or second symbol according to the number of control signal symbols. Also, as illustrated in FIG. 3, where a PTRS is transmitted to user terminal 20, the PTRS is mapped on a fourth symbol or a symbol subsequent to the fourth symbol of the subframe.

Mapping of each DMRS may be managed using DMRS port numbers. Also, a plurality of DMRS ports may collectively be managed as a DMRS port group. For example, FIG. 3 indicates that DMRS ports #1 to #8 belong to DMRS port group #0 and DMRS ports #9 to #12 belong to DMRS port group #1. A PTRS port may be associated with any DMRS port of the DMRS port group. Also, the number of PTRS ports may be set for each DMRS port group and each PTRS port may be associated with any DMRS port of the DMRS port group. For example, as illustrated in FIG. 3, where the number of PTRS ports set for DMRS port group #0 is "2", the PTRS is associated with any two ports of DMRS ports #1 to #8 belonging to DMRS port group #0.

### <Downlink Communication>

Next, an example of a sequence of downlink communication (communication from radio base station 10 to user terminal 20) in the radio communication system according to the present embodiment will be described with reference to FIG. 4.

Radio base station 10 transmits a reference signal to user terminal 20 (step S11).

User terminal 20 receives the reference signal in step S11 from radio base station 10, measures channel quality using, for example, the reference signal, and determines a CQI index value. Then, user terminal 20 transmits the determined CQI index value to radio base station 10 (step S12). Note that if the carrier frequencies of the uplink and the downlink are the same, reversibility of the channel may be used and radio base station 10 may measure the channel quality and determine the CQI index value using, for example, a reference signal transmitted from user terminal 20.

Radio base station 10 receives the CQI index value in step S12 from user terminal 20 and determines a DL data signal format (step S13). For example, radio base station 10 identifies an MCS index value associated with the received CQI index value in the CQI-MCS conversion table illustrated in FIG. 5 and employs the identified MCS index value as the DL data signal format. Also, radio base station 10 determines, for example, assigned resources and the number of transmission layers.

Next, radio base station 10 generates control information based on, for example, the determination in step S13. For example, radio base station 10 generates control information including, for example, the MCS index value, assigned DMRS port numbers, information on a DMRS port group, the number of PTRS ports, the number of CWs, and the number of DMRS ports (number of layers for a data signal) (step S14).

Note that radio base station 10 may generate control information including a plurality of MCS index values. Also, radio base station 10 does not necessarily need to cause all of the above to be included in the control information and may cause only a part of the above to be included in the control information. For example, if user terminal 20 can implicitly determine the number of CWs and the number of DMRS ports from the assigned DMRS port numbers, radio base station 10 may cause neither the number of CWs nor the number of DMRS ports to be included in the control information.

Also, radio base station 10 may cause the information on a DMRS port group and/or the number of PTRS ports to be included not in the control information but in, for example, information provided in a layer that is higher than the physical layer or the MAC layer. Alternatively, the number of PRTS ports may be prescribed in advance.

Next, radio base station 10 determines DMRS ports to be associated with PTRS ports based on MCS index values of the respective CWs and a method of association of PTRS ports with DMRS ports based on MCS index values (step S15). Note that the method of association of PTRS ports with DMRS ports based on MCS index values will be described later.

Next, radio base station 10 transmits the control information (including, for example, the MCS index values of the respective CWs) generated in step S14 and a DL data signal to user terminal 20 (step S16).

User terminal 20 receives the control information in step S15 from radio base station 10 and determines DMRS ports associated with PTRS ports based on the MCS index values of the respective CWs included in the control information and a method of mapping of PTRS ports based on MCS index values (step S17).

Next, user terminal 20 performs reception processing for the DL data signal using the PTRS associated with the DMRS ports determined in step S17 (step S18).

### <Uplink Communication>

Next, an example of a sequence of uplink communication (communication from user terminal 20 to radio base station 10) in the radio communication system according to the present embodiment will be described with reference to FIG. 6. Note that in this case, the configuration (configuration on a DL signal transmission side) of the radio base station 10 illustrated in FIG. 1 is replaced with the configuration in uplink of user terminal 20, and the configuration (configuration on a DL signal reception side) of user terminal 20 illustrated in FIG. 2 is replaced with the configuration in uplink of radio base station 10.

User terminal 20 transmits a reference signal to radio base station 10 (step S21).

Radio base station 10 receives the reference signal in step S21 from user terminal 20 and measures channel quality using the reference signal (step S22). Note that if carrier frequencies of the uplink and the downlink are the same, reversibility of the channel may be used and user terminal 20 may measure the channel quality, determine a CQI index value using, for example, the reference signal transmitted from radio base station 10, and transmit the CQI index value to radio base station 10.

Next, radio base station 10 determines a UL data signal format based on a result of the channel quality measurement in step S22 (step S23). For example, radio base station 10 may convert a value of the measurement of the channel quality to a CQI index value, determine an MCS index value corresponding to the CQI index value using the CQI-MCS conversion table illustrated in FIG. 5, and employ the MCS index value for the UL data signal format, or determine an MCS index value with reference to, for example, a value of the measurement of the channel quality and employ the MCS index value for the UL data signal format. Also, radio base station 10 determines, for example, assigned resources and the number of transmission layers.

Next, radio base station 10 generates control information (including, for example, the MCS index value) based on, for example, the determination in step S23 and transmits the control information to user terminal 20 (step S24). The content of the control information is as described in step S14 above.

User terminal 20 receives the control information in step S24 from radio base station 10 and determines DMRS ports with which PTRS ports are to be associated, based on MCS index values of respective CWs included in the control information and a method of mapping of PTRS ports based on MCS index values (step S25).

Next, user terminal 20 associates PTRS ports with the DMRS ports determined in step S25 and performs transmission processing for an UL data signal (step S26).

### <Method of Association of PTRS Ports Based on MCS Index Values>

Next, a method of association of PTRS ports with DMRS ports based on MCS index values will be described. Although the below description will be given taking a case of downlink communication as an example, in the case of uplink communication, it is only necessary that operation of radio base station 10 and operation of user terminal 20 in the below be switched from each other.

Radio base station 10 determines destinations of association of PTRS ports in a DMRS port group in transmission processing as follows. Note that for each CW, radio base station 10 determines an MCS index value to be employed for the CW and a DMRS port to which the CW is assigned, by means of predetermined processing.

First, radio base station 10 identifies a CW associated with a highest MCS index value (hereinafter referred to as "high-quality CW") from among the MCS index values associated with the respective CWs. Next, radio base station 10 identifies DMRS port(s) to which the high-quality CW is assigned. Next, radio base station 10 associates a predetermined number of PTRS ports with the identified one or more DMRS ports to which the high-quality CW is assigned.

There are, for example, the below two methods of association of PTRS ports with DMRS ports to which a high-quality CW is assigned. Which of the methods to be employed may be prescribed in advance or notification of which of the methods to be employed may be provided from radio base station 10 to user terminal 20 by means of signaling.
(Method B 1) Associating PTRS ports with DMRS ports in ascending order of port numbers from among DMRS ports to which a high-quality CW is assigned.
(Method B2) Associating PTRS ports with any of DMRS ports to which a high-quality CW is assigned in such a manner that the DMRS ports associated with PTRS ports are different in each resource block. For example, PTRS ports are associated with DMRS ports in ascending order of numbers in resource blocks in ascending order of frequencies assigned to the resource blocks.

Note that if there are a plurality of high-quality CWs (that is, there are a plurality of CWs having a highest MCS index value), radio base station 10 determines destinations of association of PTRS ports as follows. First, radio base station 10 identifies a high-quality CW assigned to a DMRS port having a smallest port number from among the plurality of high-quality CWs. Next, radio base station 10 identifies DMRS ports to which the identified high-quality CW is assigned. Next, radio base station 10 associates a predetermined number of PTRS ports with the DMRS ports to which the identified high-quality CW is assigned.

On the other hand, in reception processing, user terminal 20 determines destinations of association of PTRS ports as follows. First, user terminal 20 identifies a CW having a highest MCS index value (high-quality CW) from among MCS index values of respective CWs received from radio base station 10. Next, user terminal 20 identifies DMRS ports to which the identified high-quality CW is assigned. Next, user terminal 20 determines DMRS ports associated with PTRS ports from among the identified DMRS ports to which the high-quality CW is assigned, based on, for example, method B1 or method B2 described above.

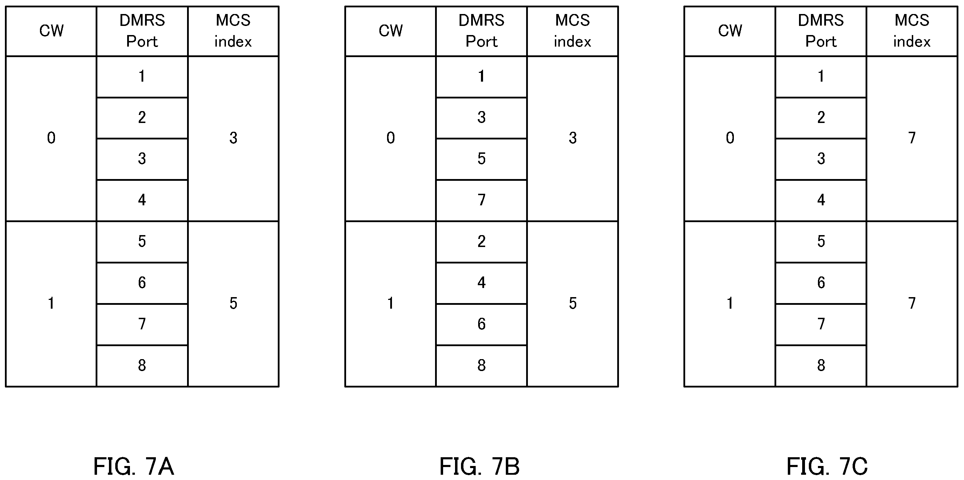

Next, a specific example of user terminal 20 determining destinations of association of PTRS ports based on MCS index values will be described with reference to FIGS. 7A to 7C.

The table in FIG. 7A indicates the following. The number of CWs is 2: CW #0 has MCS index value #3 and is assigned to DMRS ports #1 to #4; and CW #1 has MCS index value #5 and is assigned to DMRS ports #5 to #8. If the number of PTRS ports associated with DMRS port group #0 is "2", user terminal 20 determines destinations of association of PTRS ports #1, #2, for example, as follows.

User terminal 20 identifies CW #1 having highest MCS index value #5 from among DMRS ports #1 to #8 belonging to DMRS port group #0. Next, user terminal 20 identifies DMRS ports #5 to #8 assigned to CW #1, which is a high-quality CW.

Next, where method B1 above is used, user terminal 20 determines that PTRS ports #1 and #2 are associated with DMRS ports #5 and #6 of smaller port numbers from among DMRS ports #5 to #8 to which CW #1, which is a high-quality CW, is assigned.

Alternatively, where method B2 above is used, user terminal 20 determines that PTRS ports #1 and #2 are associated with two DMRS ports that are different in each resource block from among DMRS ports #5 to #8 to which CW #1, which is a high-quality CW, is assigned.

The table in FIG. 7B indicates the following. The number of CWs is 2: CW #0 has MCS index value #3 and is assigned to DMRS ports #1, #3, #5, #7; and CW #1 has MCS index value #5 and is assigned to DMRS ports #2, #4, #6, #8. If the number of PTRS ports associated with DMRS port group #0 is "2", user terminal 20 determines destinations of association of PTRS ports #1, #2, for example, as follows.

User terminal 20 identifies CW #1 having highest MCS index value #5 from among DMRS ports #1 to #8 belonging to DMRS port group #0. Next, user terminal 20 identifies DMRS ports #2, #4, #6, #8 to which CW #1, which is a high-quality CW, is assigned.

Next, where method B1 above is used, user terminal 20 determines that PTRS ports #1 and #2 are associated with DMRS ports #2 and #4 of smaller port numbers from among DMRS ports #2, #4, #6, #8 to which CW #1, which is a high-quality CW, is assigned.

Alternatively, where method B2 above is used, user terminal 20 determines that PTRS ports #1 and #2 are associated with two DMRS ports that are different in each resource block from among DMRS ports #2, #4, #6, #8 to which CW #1, which is a high-quality CW, is assigned.

The table in FIG. 7C indicated the following. The number of CWs is 2: CW #0 has MCS index value #7 and is assigned to DMRS ports #1 to #4; and CW #1 has MCS index value #7 and is assigned to DMRS ports #5 to #8. If the number of PTRS ports associated with DMRS port group #0 is "2", user terminal 20 determines destinations of association of PTRS ports #1, #2, for example, as follows.

User terminal 20 identifies CW #0 and CW #1 having highest MCS index value #7 from among DMRS ports #1 to #8 belonging to DMRS port group #0. Next, user terminal 20 identifies CW #0, which is a high-quality CW assigned to DMRS port #1 of a smallest port number, and identifies DMRS ports #1 to #4 to which CW #0, which is the high-quality CW, is assigned.

Note that subsequent processing, that is, processing using method B1 or method B2 above is the same as the processing described with reference to FIG. 7A and thus description thereof will be omitted.

Next, modification examples of Embodiment 1 will be described.

### <Modification Example 1>

Where there are a plurality of high-quality CWs, user terminal 20 may determine destinations of associations of respective PTRS ports with DMRS ports as follows. First, user terminal 20 identifies DMRS ports to which high-quality CWs are assigned, respectively. Next, for each PTRS port, user terminal 20 determines any of the DMRS ports as a destination of association of the PTRS port.

For example, in the case of the table in FIG. 7C, user terminal 20 determines destinations of association of PTRS ports #1, #2 as follows. User terminal 20 identifies CW #0 and CW #1 having highest MCS index #7 from among DMRS ports #1 to #8 belonging to DMRS port group #0. Next, user terminal 20 identifies DMRS ports #1 to #4 to which identified CW #0, which is a high-quality CW, is assigned and DMRS ports #5 to #8 to which identified CW #1, which is a high-quality CW, is assigned. Next, where method B1 above is used, user terminal 20 determines that PTRS port #1 is associated with DMRS port #1 of a smallest port number from among DMRS ports #1 to #4 to which identified CW #0, which is a high-quality CW, is assigned and PTRS port #2 is associated with DMRS port #5 of a smallest port number from among DMRS ports #5 to #8 to which identified CW #1, which is a high-quality CW, is assigned.

Alternatively, user terminal 20 determines destinations of association of PTRS ports #1, #2 as follows. User terminal 20 identifies CW #0 and CW #1 having highest MCS index #7 from among DMRS ports #1 to #8 belonging to DMRS port group #0. Next, user terminal 20 identifies DMRS ports #1 to #8 to which identified CW #0 or CW #1, which is a high-quality CW, is assigned. Next, where method B2 above is used, user terminal 20 determines that PTRS ports are associated with two DMRS ports that are different in each resource block from among DMRS ports #1 to #8 to which identified CW #0 or CW #1, which is a high-quality CW, is assigned.

### <Modification Example 2>

Destinations of association of PTRS ports with DMRS ports may be determined according to a parameter other than the MCS index value. For example, as the parameter, a transport block size (TBS) index value may be used. Alternatively, as the parameter, a signal to noise interference ratio (SNIR) measurement value of each DMRS port or an index value related to such value may be used.

Alternatively, as the parameter, a value resulting of dividing a TBS index value of each CW into respective layers (ports) (for example, a transmission bit size per layer (port)) may be used. In this case, for destinations of association of PTRS ports, DMRS ports may be selected in descending order of SNIR measurement values irrespective of CWs. Alternatively, a destination of association of each PTRS port may be determined as any of DMRS ports to which a CW including a highest SNIR measurement value is assigned.

Note that instead of an SNIR measurement value, any of measurement values such as a signal to noise ratio (SNR), a reference signal received power (RSRP) and/or a reference signal received quality (RSRQ) may be used.

### <Modification Example 3>

Destinations of association of PTRS ports may be determined based on the number of DMRS ports to which each CW is assigned. For example, there are a plurality of CWs having a highest MCS index value (high-quality CWs), DMRS of a smallest port number to which a high-quality CW is assigned, from among DMRS ports to which the respective high-quality CWs are assigned may be determined as destinations of association.

### <Modification Example 4>

A method of association of PTRS ports may differ depending on a method of MIMO transmission. For example, a method of association of PTRS ports may be different between the case where transmission diversity using a plurality of ports is employed and a case other than that case.

### <Modification Example 5>

If the number of layers assigned to CWs is smaller than the number of assigned PTRS ports, the PTRS ports may be associated with DMRS ports in order from a DMRS port to which a CW having a higher MCS index value is assigned.

For example, it is assumed that: CW #0 has MCS index value #3 and is assigned to DMRS ports #1 to #4; and CW #1 has MCS index #5 and is assigned to DMRS ports #5 to #6. Then, where the number of PTRS ports associated with DMRS port group #0 is "4", destinations of association of PTRS ports #1, #2, #3, #4 are determined, for example, as follows.

In other words, PTRS ports #1, #2 are associated with DMRS ports #5, #6 to which CW #1 having highest MCS index value #5 is assigned and PTRS ports #3, #4 are associated with DMRS ports #1, #2 (where method B1 is employed) from among DMRS ports #1 to #4 to which CW #0 having second highest MCS index value #3 is assigned.

### <Modification Example 6>

In the case of retransmission of a data signal, PTRS ports may be associated with DMRS ports that are a same as those in the case of a first transmission of the data signal. Alternatively, in the case of retransmission of a data signal, PTRS ports may be associated with DMRS ports in order from a DMRS port of a smallest number from among DMRS ports subject to the retransmission.

### <Effects of Embodiment 1>

As described above, in Embodiment 1, radio base station 10 determines DMRS ports to be associated with PTRS ports in a downlink resource according to MCS index values of respective CWs. Also, user terminal 20 determines the DMRS ports associated with the PTRS ports in the downlink resource according to the MCS index values of the respective CWs.

Also, in Embodiment 1, user terminal 20 determines DMRS ports to be associated with PTRS ports in an uplink resource according to MCS index values of respective CWs. Also, radio base station 10 determines the DMRS ports associated with the PTRS ports in the uplink resource according to the MCS index values of the respective CWs.

Consequently, radio base station 10 can associate PTRS ports with DMRS ports of the high channel quality using MCS index values, and user terminal 20 can determine DMRS ports associated with the PTRS ports, using the MCS index values. In other words, even in the case of transmission of a plurality of CWs, PTRS ports can be associated with DMRS ports of the high channel quality, enabling enhancement in accuracy of correction of phase noise.

### (Embodiment 2)

Although Embodiment 1 has been described in terms of a form using the MCS index value as an example of a value relating to the communication quality, in Embodiment 2, a form using a CQI index value as an example of a value relating to the communication quality. Note that configurations of radio base station 10 and user terminal 20 are similar to those in FIGS. 1 and 2 and thus description thereof will be omitted.

### <Method of Association of PTRS Ports with DMRS Ports Based on CQI Index Values>

Next, a method of association of PTRS ports with DMRS ports based on CQI index values will be described. Note that a combination of a modulation method and a coding rate indicated by a CQI index value may be, for example, a combination satisfying a condition in which a rate of errors relative to data is equal to or below a predetermined target error rate.

In transmission processing, radio base station 10 determines destinations of association of PTRS ports in a DMRS port group as follows. First, radio base station 10 identifies a highest CQI index value from among CQI index values transmitted from user terminal 20. Next, radio base station 10 identifies a CW having the identified highest CQI index value ("high-quality CW"). Next, radio base station 10 identifies DMRS ports to which the high-quality CW is assigned. Next, radio base station 10 associates a predetermined number of PTRS ports with identified DMRS ports to which the high-quality CW is assigned. For a method of the association of the PTRS ports with the DMRS ports to which the high-quality CW is assigned, method B 1 or method B2 described in Embodiment 1 can be employed.

Note that if there are a plurality of high-quality CWs (that is, if there is a plurality of CWs having a highest CQI index value), radio base station 10 determines destinations of association of PTRS ports as follows. First, radio base station 10 identifies a high-quality CW assigned to a DMRS port of a smallest port number from among the plurality of high-quality CWs. Next, radio base station 10 identifies DMRS ports to which the identified high-quality CW is assigned. Next, radio base station 10 associates a predetermined number of PTRS ports with the identified DMRS ports to which the high-quality CW is assigned.

On the other hand, in reception processing, user terminal 20 determines destinations of association of PTRS ports as follows. First, user terminal 20 stores a highest CQI index value from among CQI index values transmitted to radio base station 10. Next, user terminal 20 identifies a CW having a highest CQI index value (high-quality CW) from among respective CWs received from radio base station 10. Next, user terminal 20 identifies DMRS ports to which the identified high-quality CW is assigned. Next, user terminal 20 determines DMRS ports associated with PTRS ports from among the identified DMRS ports to which the high-quality CW is assigned, for example, based on method B1 or method B2 described in Embodiment 1.

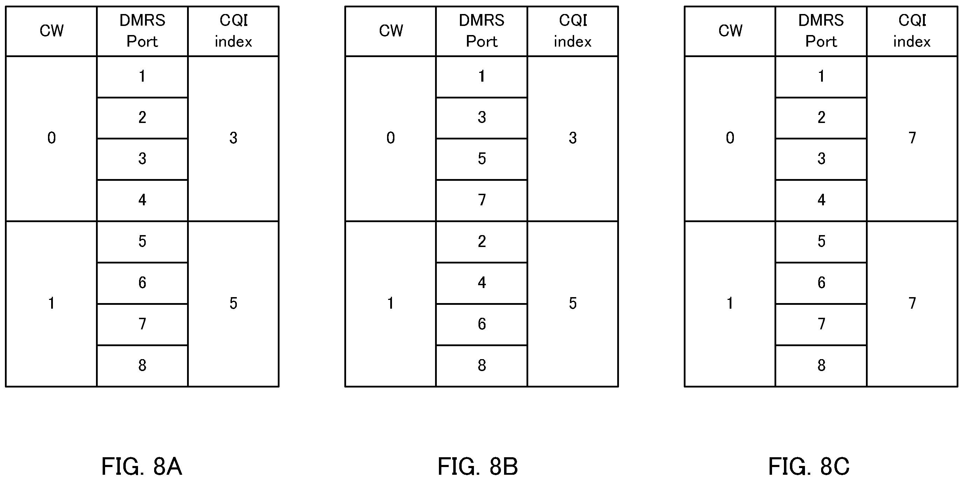

Next, a specific example of user terminal 20 determining destinations of association of PTRS ports based on CQI indexes will be described with reference to FIGS. 8A to 8C.

The table in FIG. 8A indicates the following. The number of CWs is 2: CW #0 has CQI index #3 and is assigned to DMRS ports #1 to #4; and CW #1 has CQI index #5 and is assigned to DMRS ports #5 to #8. Where the number of PTRS ports associated with DMRS port group #0 is "2", user terminal 20 determines destinations of association of PTRS ports #1, #2, for example, as follows.

User terminal 20 identifies CW #1 having highest CQI index value #5 measured by relevant user terminal 20 from among DMRS ports #1 to #8 belonging to DMRS port group #0. Next, user terminal 20 identifies DMRS ports #5 to #8 to which CW #1, which is a high-quality CW, is assigned.

Next, where method B1 above is used, user terminal 20 determines that PTRS ports #1 and #2 are associated with DMRS ports #5 and #6 of smaller port numbers from among DMRS ports #5 to #8 to which CW #1, which is a high-quality CW, is assigned.

Alternatively, where method B2 above is used, user terminal 20 determine that PTRS ports #1 and #2 are associated with two DMRS ports that are different in each resource block from among DMRS ports #5 to #8 to which CW #1, which is a high-quality CW, is assigned.

The table in FIG. 8B indicates the following. The number of CWs is 2: CW #0 has CQI index value #3 and is assigned to DMRS ports #1, #3, #5, #7; and CW #1 has CQI index value #5 and is assigned to DMRS ports #2, #4, #6, #8. Where the number of PTRS ports associated with DMRS port group #0 is "2", user terminal 20 determines destinations of association of PTRS ports #1, #2, for example, as follows.

User terminal 20 identifies CW #1 having highest CQI index value #5 measured by relevant user terminal 20 from among DMRS ports #1 to #8 belonging to DMRS port group #0. Next, user terminal 20 identifies DMRS ports #2, #4, #6, #8 to which CW #1, which is a high-quality CW, is assigned.

Next, where method B1 above is used, user terminal 20 determines that PTRS ports #1 and #2 are associated with DMRS ports #2 and #4 of smaller numbers from among DMRS ports #2, #4, #6, #8 to which CW #1, which is a high-quality CW, is assigned.

Alternatively, where method B2 above is used, user terminal 20 determines that PTRS ports #1 and #2 are associated with two DMRS ports that are different in each resource block from among DMRS ports #2, #4, #6, #8 to which CW #1, which is a high-quality CW, is assigned.

The table in FIG. 8C indicates the following. The number of CWs is 2: CW #0 has CQI index #7 and is assigned to DMRS ports #1 to #4; and CW #1 has CQI index #7 and is assigned to DMRS ports #5 to #8. Where the number of PTRS ports associated with DMRS port group #0 is "2", user terminal 20 determines destinations of association of PTRS ports #1, #2, for example, as follows.

User terminal 20 identifies CW #0 and CW #1 having highest CQI index value #7 measured by relevant user terminal 20 from among DMRS ports #1 to #8 belonging to DMRS port group #0. Next, user terminal 20 identifies CW #0, which is a high-quality CW, assigned to DMRS port #1 of a smallest port number, and identifies DMRS ports #1 to #4 to which CW #0, which is the high-quality CW, is assigned.

Note that subsequent processing, that is, processing using method B1 or method B2 described above is the same as the processing described with reference to FIG. 8A and thus description thereof will be omitted.

Next, modification examples of Embodiment 2 will be described. Note that the modification examples of Embodiment 2 include the modification examples of Embodiment 1 with the "MCS index value(s)" replaced with "CQI index value(s)".

### <Modification Example 1>

It is possible that: in the case of first transmission of a data signal, the above-described method of association of PTRS ports with DMRS ports based on CQI index values is employed; and in the case of retransmission of the data signal, the above-described method of association of PTRS ports based on MCS index values is employed.

### <Effects of Embodiment 2>

As described above, in Embodiment 2, radio base station 10 determines DMRS ports to be associated with PTRS ports in downlink resources according to CQI index values of respective CWs. Also, user terminal 20 determines the DMRS ports associated with the PTRS ports in the downlink resources according to CQI index values measured by relevant user terminal 20.

Consequently, radio base station 10 can associate PTRS ports with DMRS ports of high channel quality using CQI index values, and user terminal 20 can determine the DMRS ports associated with the PTRS ports, using the CQI index values. In other words, even in the case of transmission of a plurality of CWs, PTRS ports can be associated with DMRS ports of high channel quality, enabling enhancement in accuracy of correction of phase noise.

The respective embodiments have been described above.

### <Supplements>

Note that a start number for DMRS ports is not limited to "1" and may be equal to or larger than "2". Also, the content of the present embodiment is applicable to each of slot scheduling and non-slot scheduling. Also, a PTRS may be called a phase fluctuation correction RS, a tracking RS (TRS), a phase compensation RS (PCRS), or an Additional RS. Also, each of an MCS index and a CQI index may be called a different name.

Also, in the above description, where multi-user MIMO (MU-MIMO) multiplexing is employed, a configuration for mapping of a correction RS (for example, whether the correction RS is mapped or not, and/or a position and/or a density of the mapping) may be a configuration that is different in each user terminal 20 subject to the multiplexing or may be a configuration that is common to user terminals 20 subject to the multiplexing.

Also, although in the above description, one RB is defined by 168 REs each constituted by 14 symbols and 12 subcarriers, in the present embodiment, there is no specific limitation on definition (the number of symbols and the number of subcarriers) of RBs.

Also, in the present embodiment, there is no specific limitation on a procedure for generating a sequence for a correction RS. For example, it is possible to generate a pseudo noise (PN) sequence with any of, or any combination of, physical cell identities (PCIDs), virtual cell identities (VCIDs), and user equipment cell identities (UE-IDs) as a sequence seed and generate a correction RS using the PN sequence. Alternatively, instead of a PN sequence, another sequence such as a Zadoff-Chu sequence may be used to generate a correction RS.

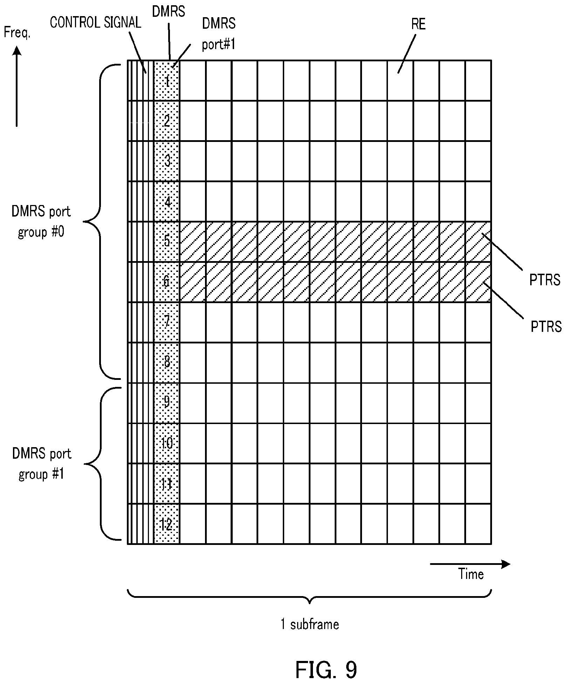

Also, although the above description indicates the case where a demodulation RS is mapped on a third symbol in each subcarrier in a RB as an example, the present embodiment is not limited to this example, a demodulation RS may be mapped on any of symbols on the front side (from the head symbol to a k-th symbol (k is an integer of no less than 2, for example, k = 4)) of a RB. In this case, a correction RS may be mapped on a symbol on the rear side relative to the symbol on which the demodulation RS is mapped or may be mapped over all of symbols. For example, as illustrated in FIG. 9, radio base station 10 may map a DL control signal on a head symbol in each subcarrier and map a demodulation RS on a second symbol in each subcarrier.

Also, a mapping pattern of a correction RS is not limited to limited to the patterns illustrated in FIGS. 3 and 9. For example, within one RB, a correction RS may be mapped on any of subcarriers and may be mapped on two or more subcarriers. Also, mapping of a correction RS is not limited to the case where a correction RS is continuously mapped on a fourth symbol and subsequent symbols as illustrated in FIG. 3, (or a third symbol and subsequent symbols as illustrated in FIG. 9), and a correction RS may be mapped on some of symbols (for example, a tail end symbol) or may be mapped at regular intervals.

Also, although the above description has been described in terms of the case where notification of positions of destinations of mapping of a correction RS is implicitly provided from radio base station 10 to user terminal 20 by a parameter set for user terminal 20, notification of part or all of positions of destinations of mapping of a correction RS may explicitly be provided by means of signaling. A method of the notification may be a method in which notification is provided to user terminal 20 by means of, for example, a higher layer (for example, radio resource control (RRC) signaling, medium access control (MAC) signaling, or physical layer (PHY) signaling.

### (Hardware Configuration)

Note that the block diagrams used to describe the embodiments illustrate blocks on the basis of functions. These functional blocks (constituent sections) are implemented by any combination of hardware and/or software. A means for realizing the functional blocks is not particularly limited. That is, the functional blocks may be implemented by one physically and/or logically coupled apparatus. Two or more physically and/or logically separated apparatuses may be directly and/or indirectly (for example, wired and/or wireless) connected, and the plurality of apparatuses may implement the functional blocks.

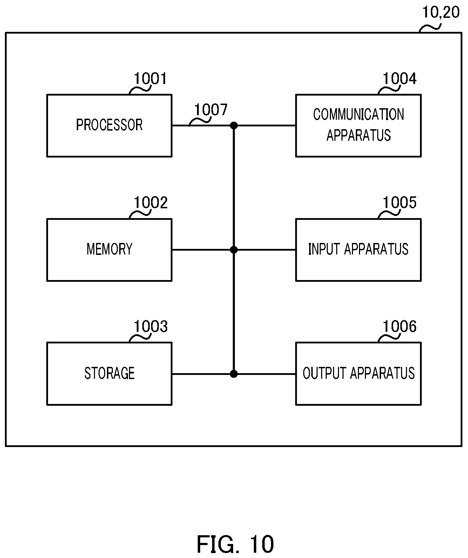

For example, the radio base station, the user terminal, and/or the like, according to an embodiment of the present invention may function as computers which perform processing of the radio communication method of the present invention. FIG. 10 illustrates an example of hardware configurations of the radio base station and the user terminal according to an embodiment of the present invention. The above-described radio base station 10 and user terminal 20 may be physically configured as a computer apparatus including processor 1001, memory 1002, storage 1003, communication apparatus 1004, input apparatus 1005, output apparatus 1006, bus 1007, and/or the like.

Note that the term "apparatus" in the following description can be replaced with a circuit, a device, a unit, and/or the like. The hardware configurations of radio base station 10 and user terminal 20 may include one or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in radio base station 10 and user terminal 20 are implemented by predetermined software (program) loaded into hardware, such as processor 1001, memory 1002, and/or the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and/or the like. For example, controller 101, transmission signal generator 102, encoder and modulator 103, mapper 104, IFFT processor 105, FFT processor 203, signal separator 204, controller 205, channel estimator 206, channel corrector 207, and demodulator and decoder 208 described above may be implemented by processor 1001.

Processor 1001 reads out a program (program code), a software module, or data from storage 1003 and/or communication apparatus 1004 to memory 1002 and executes various types of processing according to the read-out program and/or the like. The program used is a program for causing the computer to execute at least part of the operation described in the embodiments. For example, controller 101 of radio base station 10 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), and/or the like. Memory 1002 can save a program (program code), a software module, and/or the like that can be executed to carry out the radio communication method according to an embodiment of the present invention.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmitters 106 and 209, antennas 107 and 201, receivers 108 and 202, and/or the like, as described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, radio base station 10 and user terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, and/or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and/or the Like)

The orders of the processing procedures, the sequences, the flow charts, and/or the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and/or the like can be output from a higher layer (or a lower layer) to a lower layer (or a higher layer). The information, the signals, and/or the like may be input and output through a plurality of network nodes.

### (Handling of Input and Output Information and/or the Like)

The input and output information and/or the like may be saved in a specific place (for example, memory) or may be managed by a management table. The input and output information and/or the like can be overwritten, updated, or additionally written. The output information and/or the like may be deleted. The input information and/or the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and/or the like.

The software, the instruction, and/or the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and/or the like described in the present specification may be expressed by using any of various different techniques. For example, data, instructions, commands, information, signals, bits, symbols, chips, and/or the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, and/or the like.

### ("System" and "Network")

The terms "system" and "network" used in the present specification can be interchangeably used.

### (Names of Parameters and Channels)

The information, the parameters, and/or the like described in the present specification may be expressed by absolute values, by values relative to predetermined values, or by other corresponding information. For example, radio resources may be indicated by indices.

The names used for the parameters are not limited in any respect. Furthermore, the numerical formulas and/or the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head(RRH)). The term "cell" or "sector" denotes part or all of the coverage area of the base station and/or of the base station subsystem that perform the communication service in the coverage. Furthermore, the terms "base station," "eNB," "cell," and "sector" can be interchangeably used in the present specification. The base station may be called a fixed station, a NodeB, an eNodeB (eNB), an access point, a femto cell, a small cell, and/or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (for example, looking up in a table, a database or another data structure), ascertaining and/or the like. Also, "determining" may be regarded as receiving (for example, receiving information), transmitting (for example, transmitting information), inputting, outputting, accessing (for example, accessing data in a memory) and/or the like. Also, "determining" may be regarded as resolving, selecting, choosing, establishing and/or the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. The correction RS may be called a TRS (Tracking RS), a PC-RS (Phase Compensation RS), a PTRS (Phase Tracking RS), or an additional RS. The demodulation RS and the correction RS may be called by other corresponding names, respectively. The demodulation RS and the correction RS may be specified by the same name (for example, demodulation RS).

The description "based on" used in the present specification does not mean "based only on," unless otherwise specifically stated. In other words, the description "based on" means both of "based only on" and " based at least on."

The "section" in the configuration of each apparatus may be replaced with "means," "circuit," "device," and/or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, and/or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, and/or the like) in the time domain.

The radio frame, the subframe, the slot, and the symbol indicate time units in transmitting signals. The radio frame, the subframe, the slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, or one slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame described above is illustrative only, and the number of subframes included in the radio frame, the number of slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and/or the Like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present invention has been described in detail, it is obvious to those skilled in the art that the present invention is not limited to the embodiments described in the present specification. Modifications and variations of the aspects of the present invention can be made without departing from the spirit and the scope of the present invention defined by the description of the appended claims. Therefore, the description of the present specification is intended for exemplary description and does not limit the present invention in any sense.

### Industrial Applicability

An aspect of the present invention is useful for a mobile communication system.

### Reference Signs List

10 Radio base station
20 User terminal
101, 205 Controller
102 Transmission signal generator
103 Encoder and modulator
104 Mapper
105 IFFT processor
106, 209 Transmitter
107, 201 Antenna
108, 202 Receiver
203 FFT processor
204 Signal separator
206 Channel estimator
207 Channel corrector
208 Demodulator and decoder

## Claims

1. A user terminal, comprising:
a receiver that receives a downlink resource including a data signal, a demodulation reference signal, and a correction reference signal;
a channel estimator that performs channel estimation, using the demodulation reference signal; and
a demodulator that demodulates the data signal, using a result of the channel estimation, wherein
a value indicating communication quality and a plurality of demodulation reference signal ports are associated with each codeword of the data signal,
the correction reference signal is associated with any of demodulation reference signal ports associated with a high-quality codeword corresponding to a value indicating highest communication quality, and
the channel estimator calculates a phase fluctuation amount, using the correction reference signal associated with the demodulation reference signal ports for the high-quality codeword.

2. The user terminal according to claim 1, wherein the correction reference signal is associated with a demodulation reference signal port in ascending order of port number from among the demodulation reference signal ports associated with the high-quality codeword.

3. The user terminal according to claim 1, wherein the correction reference signal is associated with a port that is different in each resource block from among the demodulation reference signal ports associated with the high-quality codeword.

4. The user terminal according to any one of claims 1 to 3, wherein the value indicating communication quality is a modulation and coding scheme (MCS) index value or a channel quality indicator (CQI) index value.

5. A user terminal, comprising:
a mapper that maps a data signal, a demodulation reference signal, and a correction reference signal on an uplink resource; and
a transmitter that transmits the uplink resource, wherein
a value indicating communication quality and a plurality of demodulation reference signal ports are associated with each codeword of the data signal; and
the mapper associates the correction reference signal with any of demodulation reference signal ports associated with a high-quality codeword corresponding to a value indicating highest communication quality.

6. A radio communication method, comprising:
receiving a downlink resource including a data signal, a demodulation reference signal, and a correction reference signal;
performing channel estimation, using the demodulation reference signal; and
demodulating the data signal, using a result of the channel estimation, wherein
a value indicating communication quality and demodulation reference signal ports are associated with each codeword of the data signal;
the correction reference signal is associated with any of demodulation reference signal ports associated with a high-quality codeword corresponding to a value indicating highest communication quality; and
in the channel estimation, a phase fluctuation amount is calculated using the correction reference signal associated with the demodulation reference signal ports for the high-quality codeword.
